# EUROPEAN PATENT SPECIFICATION

(11) **EP 4 333 403 B1**
(45) Date of publication and mention of the grant of the patent: **02.07.2025**
(21) Application number: 22217238.9
(22) Date of filing: 29.12.2022
(51) Int. Cl.: H04L 67/00, H04L 67/51, H04L 67/564, H04L 67/59

(54) **AUTO-SCALING SERVICE MESH FOR VIRTUAL MACHINES**
SELBSTSKALIERENDES DIENSTNETZ FÜR VIRTUELLE MASCHINEN
MAILLAGE DE SERVICE À MISE À L'ÉCHELLE AUTOMATIQUE POUR MACHINES VIRTUELLES

(30) Priority: 02.09.2022 US 202217929526
(43) Date of publication of application: 06.03.2024
(73) Proprietor: Juniper Networks, Inc., Sunnyvale, CA 94089 (US)
(72) Inventor: KOMMULA, Raja, Sunnyvale, 94089 (US); SUNKADA, Ganesh Byagoti Matad, Sunnyvale, 94089 (US); SRIDHAR, Thayumanavan, Sunnyvale, 94089 (US); AYYAGARI, Santha Nagesh, Sunnyvale, 94089 (US); SINGH, Vikram, Sunnyvale, 94089 (US); BALL, Darrell, Sunnyvale, 94089 (US); MARIAPPAN, Yuvaraja, Sunnyvale, 94089 (US)
(74) Representative: D Young & Co LLP

(56) References cited:
- X X: "What is a service mesh?", 1 July 2022 (2022-07-01), pages 1 - 7, XP093073584, Retrieved from the Internet <URL:https://web.archive.org/web/20220701085234/https://konghq.com/learning-center/service-mesh/what-is-a-service-mesh> [retrieved on 20230814]
- ANONYMOUS ANONYMOUS: "Packet Sniffing", 30 June 2022 (2022-06-30), pages 1 - 6, XP093073528, Retrieved from the Internet <URL:https://web.archive.org/web/20220630232800/https://www.paessler.com/it-explained/packet-sniffing> [retrieved on 20230814]

## Description

### RELATED APPLICATION

This application claims the benefit of U.S. Application No. 17/929,526, filed September 2, 2022.

### FIELD AND BACKGROUND

The disclosure relates to computer networks.

A service mesh provides an infrastructure layer for modern distributed applications to exchange information between various microservices in a secure and observable way. For example, a simple e-commerce application can be divided into microservices, which may include a product-view service to show product information, a database service to maintain inventory of products, and a cart service to track products selected by a user. Other examples of distributed applications can have hundreds or even thousands of different microservices. The service mesh layer may control and manage inter-service communication. These microservices may interact with other services through a service proxy. These service proxies are configured and managed by service mesh controllers. The service mesh is divided into two primary components: Data plane and Control plane. The data plane provides communication between services through service proxies. Each service proxy intercepts the network traffic for that service and helps in routing the traffic, triggering circuit breakers, requesting timeouts, and performing retries. The control plane dynamically programs the service proxies. The Internet publication "What is a service mesh?", XP093073584, relates to the configuration of service proxies via a control plane.

### SUMMARY

Particular aspects are set out in the appended independent claims. Various optional embodiments are set out in the dependent claims.

In general, techniques are described for automatically and transparently providing service proxying to virtual machines using Network Interface Cards (NICs). In some examples, a service proxy implemented by a NIC of a computing device that hosts a virtual machine may mimic sidecar service proxy behavior, and a NIC-based mesh agent may automatically detect the service offering by the virtual machine and interact with control plane components to dynamically incorporate the service into the service mesh.

The techniques may provide one or more technical advantages. For example, because the NIC executes the service proxy, the techniques can be applied without requiring any modification of the virtual machine that provides the underlying service. This is particularly advantageous for legacy services and in a mixed deployment of containerized services and virtual machine-implemented services. Unlike a containerized environment, virtual machines run their own guest operating system and environment, and deploying a service proxy in a virtual machine is more complex and less standardized than deploying a service proxy in a container. In addition, the techniques may allow developers of distributed application to avoid validating additional software installed in a virtual machine to otherwise support a service proxy, for the virtual machine is unchanged and the service proxy provided by the NIC on the data path to the virtual machine.

In one example, a method comprises detecting, by a network interface card (NIC), a service provided by a virtual machine; and configuring, in response to detecting the service, a service proxy for execution by the NIC to proxy the service in a service mesh.

In one example, a network interface card (NIC) comprises a processor; and a memory comprising instructions that, when executed by the processor, cause the NIC to detect, by a network interface card (NIC), a service provided by a virtual machine; and configure, in response to detecting the service, a service proxy for execution by the NIC to proxy the service in a service mesh.

In one example, a system comprises containers containing services and service proxies, the services and service proxies being associated with a control plane of a service mesh; and a server comprising a virtual machine configured to provide a service; and a network interface card (NIC). The NIC is configured to detect a service provided by the virtual machine; and configure, in response to detecting the service, a service proxy for execution by the NIC to proxy the service in a service mesh.

The details of one or more embodiments of this disclosure are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example network system having a data center in which examples of the techniques described herein may be implemented.
FIG. 2 is a block diagram illustrating an example computing device that uses a network interface card having a separate processing unit, to perform services managed by an edge services platform according to techniques described herein.
FIG. 3 is a conceptual diagram illustrating a data center with servers that each include a network interface card having a separate processing unit, controlled by an edge services platform, according to techniques of this disclosure.
FIG. 4 is a conceptual diagram illustrating a service mesh extended to services provided by a Virtual Machine (VM) using a NIC according to techniques of this disclosure.
FIG. 5 is a conceptual diagram illustrating an auto-join of VM-based dependent services to a service mesh according to techniques of this disclosure.
FIG. 6 is a conceptual diagram illustrating an auto-join of VM-based independent services to a service mesh, according to techniques of this disclosure.
FIG. 7 is a flowchart illustrating an example method according to techniques of this disclosure.

Like reference characters denote like elements throughout the description and figures.

### DETAILED DESCRIPTION

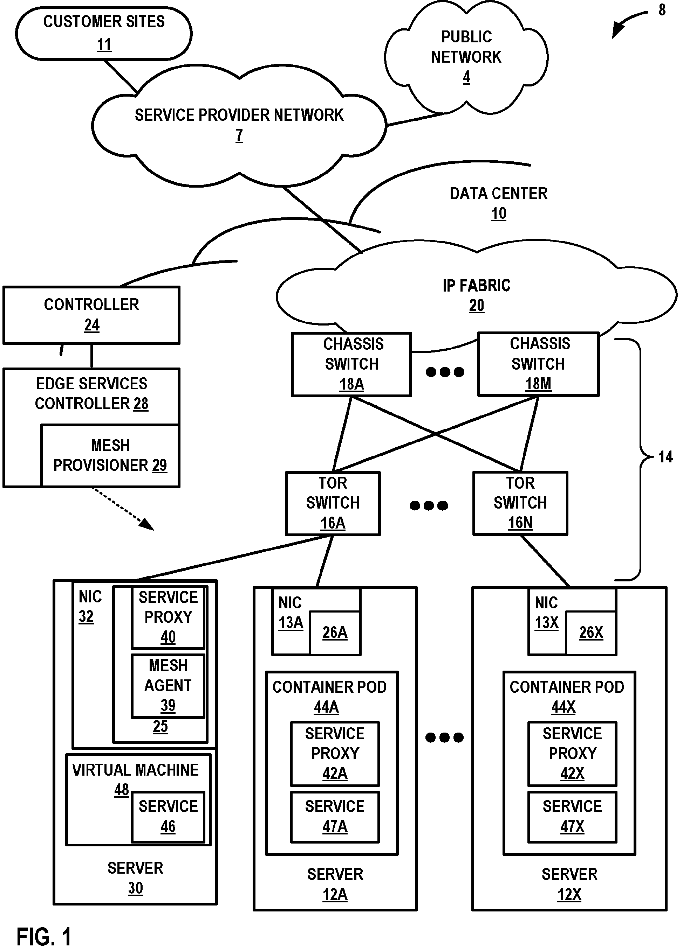

FIG. 1 is a block diagram illustrating an example network system 8 having a data center 10 in which examples of the techniques described herein may be implemented. In general, data center 10 provides an operating environment for applications and services for customer sites 11 having one or more customer networks coupled to data center 10 by a service provider network 7. Data center 10 may, for example, host infrastructure equipment, such as networking and storage systems, redundant power supplies, and environmental controls. Service provider network 7 is coupled to public network 4. Public network 4 may represent one or more networks administered by other providers and may thus form part of a large-scale public network infrastructure, e.g., the Internet. For instance, public network 4 may represent a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 4 are illustrated and described primarily as edge networks of service provider network 7, in some examples, one or more of customer sites 11 and public network 4 are tenant networks within data center 10 or another data center. For example, data center 10 may host multiple tenants (customers) each associated with one or more virtual private networks (VPNs). Each of the VPNs may implement one of customer sites 11.

Service provider network 7 offers packet-based connectivity to attached customer sites 11, data center 10, and public network 4. Service provider network 7 may represent a network that is operated (and potentially owned) by a service provider to interconnect a plurality of networks. Service provider network 7 may implement Multi-Protocol Label Switching (MPLS) forwarding and, in such instances, may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super-computing, and so on. Although illustrated as a separate edge network of service provider network 7, elements of data center 10 such as one or more physical network functions (PNFs) or virtualized network functions (VNFs) may be included within the service provider network 7 core.

In this example, data center 10 includes storage and/or compute servers interconnected via switch fabric 14 provided by one or more tiers of physical network switches and routers, with servers 12A-12X (herein, "servers 12") and server 30 depicted as coupled to top-of-rack (TOR) switches 16A-16N. This disclosure may refer to TOR switches 16A-16N collectively, as "TOR switches 16." TOR switches 16 may be network devices that provide layer 2 (MAC) and/or layer 3 (e.g., IP) routing and/or switching functionality.

As is discussed below, server 30 implements virtual machine 48 while servers 12 implement container pods 44 such as in a Kubernetes cluster. Servers 12 and server 30 may also be referred to herein as "hosts" or "host devices." Data center 10 may include many additional servers coupled to other TOR switches 16 of data center 10. In the example of FIG. 1, servers 12 and server 30 are directly coupled to TOR switches 16. Other servers (not shown) may reach TOR switches 16 and IP fabric 20 via servers 12 or server 30.

Switch fabric 14 in the illustrated example includes interconnected TOR switches 16 (or other "leaf" switches) coupled to a distribution layer of chassis switches 18A-18M (collectively, "chassis switches 18"). Chassis switches may also be referred to as "spine" or "core" switches. Although not shown in the example of FIG. 1, data center 10 may also include one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, and/or other network devices.

In some examples, TOR switches 16 and chassis switches 18 provide servers 12 and server 30 with redundant (e.g., multi-homed) connectivity to IP fabric 20 and service provider network 7. Chassis switches 18 aggregate traffic flows and provide connectivity between TOR switches 16. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 via service provider network 7. The switching architecture of data center 10 shown in FIG. 1 is merely an example. Other switching architectures may have more or fewer switching layers, for instance. TOR switches 16 and chassis switches 18 may each include physical network interfaces.

In this disclosure, the terms "packet flow," "traffic flow," or simply "flow" each refer to a set of packets originating from a particular source device or endpoint and sent to a particular destination device or endpoint. A single flow of packets may be identified by the 5-tuple: <source network address, destination network address, source port, destination port, protocol>, for example. This 5-tuple generally identifies a packet flow to which a received packet corresponds. An n-tuple refers to any n items drawn from the 5-tuple. For example, a 2-tuple for a packet may refer to the combination of <source network address, destination network address> or <source network address, source port> for the packet. The term "source port" refers to a transport layer (e.g., TCP/UDP) port. A "port" may refer to a physical network interface of a NIC.

Each of servers 12 and server 30 may be a compute node, an application server, a storage server, or other type of server. For example, each of servers 12 and server 30 may represent a computing device, such as a general-purpose processor-based server, configured to operate according to techniques described herein. Servers 12 and server 30 may provide Network Function Virtualization Infrastructure (NFVI) for a Network Function Virtualization (NFV) architecture.

Servers 12 and server 30 may host endpoints for one or more virtual networks that operate over the physical network represented in FIG. 1 by IP fabric 20 and switch fabric 14. Endpoints may include, e.g., virtual machines, containerized applications, or applications executing natively on the operating system or bare metal. Although described primarily with respect to a data center-based switching network, other physical networks, such as service provider network 7, may underlay the one or more virtual networks.

Each of servers 12 includes at least one network interface card (NIC) of NICs 13A-13X (collectively, "NICs 13"). Server 30 includes NIC 32. Each of NICs 13 and NIC 32 includes at least one port. Each of NICs 13 and NIC 32 may send and receive packets over one or more communication links coupled to the ports of the NIC.

In some examples, each of NICs 13 and NIC 32 provides one or more virtual hardware components for virtualized input/output (I/O). A virtual hardware component for virtualized I/O may be a virtualization of a physical NIC 13 or NIC 32 (the "physical function"). For example, in Single Root I/O Virtualization (SR-IOV), which is described in the Peripheral Component Interface Special Interest Group SR-IOV specification, the Peripheral Component Interface (PCI) express (PCIe) Physical Function of the network interface card (or "network adapter") is virtualized to present one or more virtual network interface cards as "virtual functions" for use by respective endpoints executing on servers 12 and server 30. In this way, the virtual network endpoints may share the same PCIe physical hardware resources and the virtual functions are examples of virtual hardware components. As another example, one or more servers 12 and server 30 may implement Virtio, a para-virtualization framework available, e.g., for the Linux Operating System, that provides emulated NIC functionality as a type of virtual hardware component. As another example, one or more servers 12 and server 30 may implement Open vSwitch to perform distributed virtual multilayer switching between one or more virtual NICs (vNICs) for hosted virtual machines, where such vNICs may also represent a type of virtual hardware component. In some instances, the virtual hardware components are virtual I/O (e.g., NIC) components. In some instances, the virtual hardware components are SR-IOV virtual functions and may provide SR-IOV with Data Plane Development Kit (DPDK)-based direct process user space access.

In some examples, one or more of NICs 13 and NIC 32 include multiple ports. NICs 13 and NIC 32 may be connected to one another via ports of NICs 13 and NIC 32 and communications links to form a NIC fabric having a NIC fabric topology. A NIC fabric is the collection of NICs 13 and NIC 32 connected to at least one other of NICs 13 and NIC 32 and the communications links coupling NICs 13 and NIC 32 to one another.

NIC 32 includes processing unit 25; NICs 13A-13X include processing units 26A-26X (collectively, "processing units 26"). Processing unit 25 and processing units 26 offload aspects of the datapath from CPUs of servers 12 and server 30. One or more of processing unit 25 and processing units 26 may be a multi-core ARM processor or other general-purpose processor with hardware acceleration provided by a Data Processing Unit (DPU), a Field Programmable Gate Array (FPGA), and/or an Application Specific Integrated Circuit (ASIC). Because NICs 13 and NIC 32 include processing unit 25 and processing units 26, NICs 13 and NIC 32 may be referred to as "SmartNICs" or "GeniusNICs."

An edge services platform may use processing unit 25 and processing units 26 of NICs 13 and NIC 32 to augment the processing and networking functionality of switch fabric 14 and/or servers 12 and server 30 that include NICs 13 and NIC 32. In the example of FIG. 1, network system 8 includes an edge services controller 28. This disclosure may also refer to an edge services controller, such as edge services controller 28, as an edge services platform controller.

Edge services controller 28 may manage the operations of the edge services platform within NIC 13s and NIC 32 in part by orchestrating services performed by processing unit 25 and processing units 26; orchestrating API driven deployment of edge services on NICs 13 and NIC 32; orchestrating NIC 13 and NIC 32 addition, deletion, and replacement within the edge services platform; monitoring of edge services and other resources on NICs 13 and NIC 32; and/or management of connectivity between various edge services provided by NICs 13 and NIC 32 (edge services shown in FIG. 1 include service proxy 40 and mesh agent 39). Edge services controller 28 may include one or more computing devices, such as server devices, personal computers, intermediate network devices, or the like.

Edge services controller 28 may communicate information describing edge services available on NICs 13 and NIC 32, a topology of a NIC fabric, or other information about the edge services platform to an orchestration system (not shown) or a controller 24. Example orchestration systems include OpenStack, vCenter by VMWARE, or System Center by Microsoft Corporation of Redmond, Washington. Example controllers include a controller for Contrail by JUNIPER NETWORKS or Tungsten Fabric. Controller 24 may be a network controller, software-defined network (SDN) controller, and/or network fabric manager. Additional information regarding a controller 24 operating in conjunction with other devices of data center 10 or other software-defined network is found in International Application Number PCT/US2013/044378, filed June 5, 2013, and entitled "PHYSICAL PATH DETERMINATION FOR VIRTUAL NETWORK PACKET FLOWS;" and in U.S. Patent No. 9,571,394, filed March 26, 2014, and entitled "Tunneled Packet Aggregation for Virtual Networks."

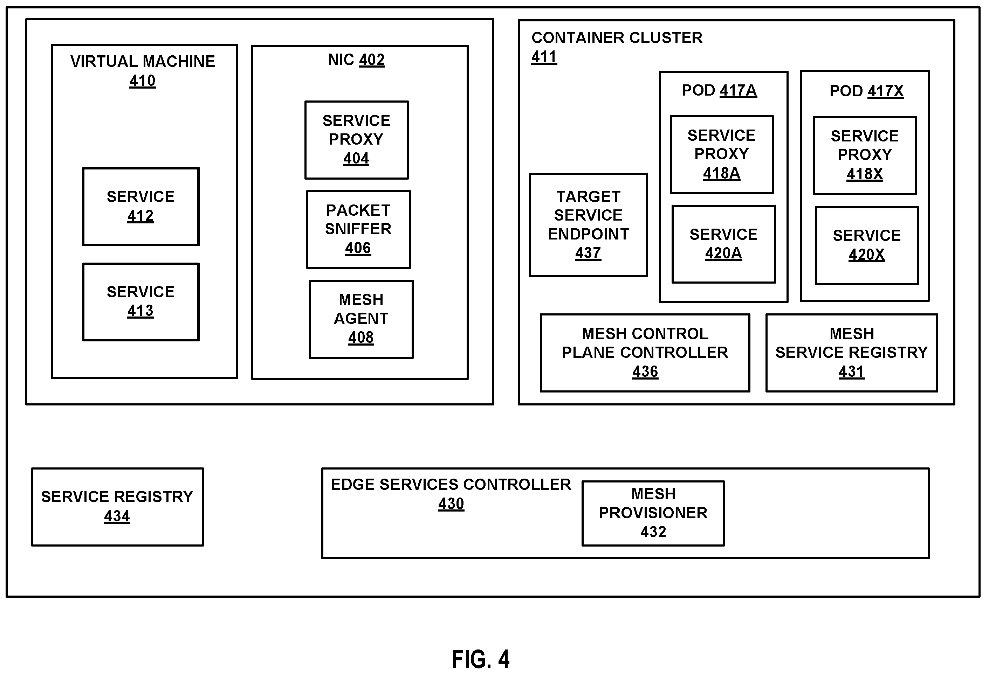

A service mesh may be used to control the interactions among services 46 and 47A-47X (collectively, "services 47"). Such services are provided by virtualized execution environments and are distinct from edge services executed and provided by NICs 32 and 13. Services 46 and 47 may be different service instances of the same service. Service meshes work by inserting service proxies next to individual services and intercepting traffic to and from that service instance. The service proxies make up at least portions of the data plane and receive command and control signals, policies, and instructions from a separate control plane (discussed in more detail with respect to FIGs. 4-6 below). Example services 46 and 47 may include services for a distributed application (e.g., an e-commerce application), such as database, cart, middleware, or business logic microservices.

The service proxies may intercept communications between services 46 and 47 and provide functionality such as security (e.g., encrypting traffic between applications, ensuring identity, or handling higher-level concerns like policy and authentication and authorization), reliability (e.g., making interactions between services more reliable, accounting for network and application failures, or improving on container orchestration functionality) and observability (e.g., providing insight into what your apps are doing, making metrics about their interactions easily available, and providing maps into inter-app communications).

The control plane of the service mesh manages the interactions between the proxies by providing policy and information to them. The control plane may manage the interactions between the proxies by providing policy and information to them. The control plane also may provide operators with an interface into the mesh and hosts whatever API it exposes. Additionally, the control plane may host built-in monitoring and visualization tools that the service mesh provides.

Container pods 44A-44X (collectively, "container pods 44") may be used. Like a virtual machine, each container is virtualized and may remain isolated from the host machine and other containers. However, unlike a virtual machine, each container may omit an individual operating system and provide only an application suite and application-specific libraries. A container is executed by the host machine as an isolated user-space instance and may share an operating system and common libraries with other containers executing on the host machine. Thus, container pods 44A-44X may require less processing power, storage, and network resources than virtual machines. As used herein, containers may also be referred to as virtualization engines, virtual private servers, silos, or jails. Each of container pods 44 may include one or more containers. Container pods are used in conjunction with the Kubernetes orchestration platform, but other container orchestration platforms may be used, as well as other form factors for container deployment.

In accordance with various aspects of the techniques of this disclosure, NIC 32 includes service proxy 40 executing in processing unit 25. Service proxy 40 may act as a proxy for service 46 provided by virtual machine 48. As described in this disclosure, having service proxy 40 for service 46 provided by virtual machine 48 provides a number of technical advantages. For example, because NIC 32 executes service proxy 40, no modification of virtual machine 48 is needed. This is particularly advantageous for legacy services and in a mixed deployment of containerized services and virtual machine-implemented services. Unlike a containerized environment, virtual machine 48 runs its own guest operating system and environment, and deploying a service proxy in a virtual machine, such as virtual machine 48, is more complex and less standardized than deploying a service proxy in a container. In contrast with virtual machines, adding service proxies 42A-42X to container pods 44A-44X is widely done and supported by popularly available service mesh controllers, such as Istio, Kong, Linkerd, etc.

In addition, the techniques may allow developers of distributed applications to avoid validating additional software installed in a virtual machine to otherwise support a service proxy, for virtual machine 48 is unchanged and a service proxy is instead provided by NIC 32 as service proxy 40 on the data path to virtual machine 48. A service proxy executed by a virtual machine (as opposed to a NIC) needs to be individually tested and validated for each guest operating system and thus is more difficult to implement or automate for the many thousands of different types of available virtual machines/guest operating systems.

Service proxy 40 may communicate with other service proxies such as service proxies 42A-42X associated with services 47A-47X in container pods 44A-44X. Service proxy 40 at NIC 32, service proxy 42A-42X at container pods 44A-44X, service 46 at virtual machine 48, and services 47A-47X and in container pods 44A-44X may form a data plane of the service mesh.

Mesh agent 39 at NIC 32 and mesh provisioner 29 at edge services controller 28 may be used to set up service proxy 40 at NIC 32, as discussed below in more detail with respect to FIGs. 4-6 discussed below. Mesh agent 36 may be used to auto-detect virtual machines 48 with service 46 participating in a service mesh. Mesh agent 36 may deploy and configure service proxy 40 at NIC 32. Mesh provisioner 29 may provision mesh agent 39 with a mesh controller address, certificates and tokens. Mesh provisioner 29 may also interact with the service mesh control plane and provide proxy config, certificates and authentication tokens for service proxy 40 running on NIC 32.

FIG. 1 shows container pods 44A-44X in different servers 12A-12X but multiple container pods may also be located at a single server. In the example of FIG. 1, servers 12A-12X include NICs 13A-13X but servers running containerized services need not have a SmartNIC to be part of the service mesh.

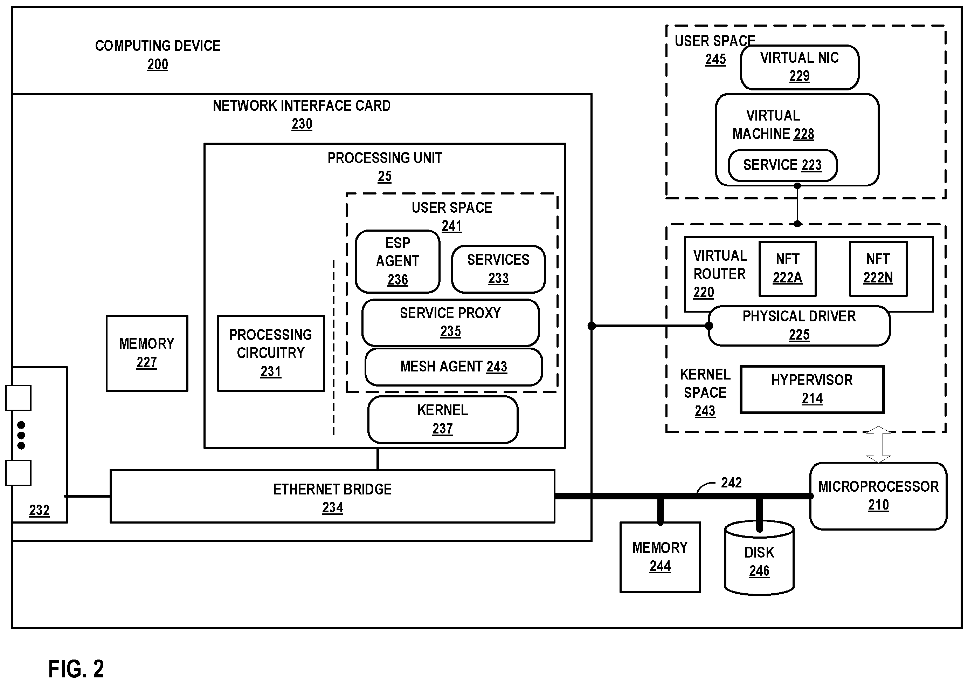

FIG. 2 is a block diagram illustrating an example computing device 200 that uses a NIC 230 having a separate processing unit 25, to perform edge services managed by an edge services platform according to techniques described herein (edge services shown in FIG. 2 include service proxy 235 and mesh agent 243). Computing device 200 of FIG. 2 may represent a real or virtual server and may represent an example instance of any of servers 12 and server 30 of FIG. 1. In the example of FIG. 2, computing device 200 includes bus 242 that couples hardware components of the hardware environment of computing device 200. Specifically, in the example of FIG. 2, bus 242 couples NIC 230, storage disk 246, and microprocessor 210. In some examples, a front-side bus couples microprocessor 210 and memory device 244. In some examples, bus 242 couples memory device 244, microprocessor 210, and NIC 230. Bus 242 may represent a PCIe bus. In some examples, a direct memory access (DMA) controller may control DMA transfers among components coupled to bus 242. In some examples, components coupled to bus 242 control DMA transfers among components coupled to bus 242.

Microprocessor 210 may include one or more processors each including an independent execution unit ("processing core") to perform instructions that conform to an instruction set architecture. Execution units may be implemented as separate integrated circuits (ICs) or may be combined within one or more multi-core processors (or "many-core" processors) that are each implemented using a single IC (i.e., a chip multiprocessor).

Disk 246 represents computer readable storage media that includes volatile and/or non-volatile, removable and/or non-removable media implemented in any method or technology for storage of information such as processor-readable instructions, data structures, program modules, or other data. Computer readable storage media includes, but is not limited to, random access memory (RAM), read-only memory (ROM), EEPROM, flash memory, CD-ROM, digital versatile discs (DVD) or other optical storage, magnetic cassettes, magnetic tape, magnetic disk storage or other magnetic storage devices, or any other medium that can be used to store the desired information and that can be accessed by microprocessor 210.

Memory device 244 includes one or more computer-readable storage media, which may include random-access memory (RAM) such as various forms of dynamic RAM (DRAM), e.g., DDR2/DDR3 SDRAM, or static RAM (SRAM), flash memory, or any other form of fixed or removable storage medium that can be used to carry or store desired program code and program data in the form of instructions or data structures and that can be accessed by a computer. Memory device 244 provides a physical address space composed of addressable memory locations.

Network interface card (NIC) 230 includes one or more interfaces 232 configured to exchange packets using links of an underlying physical network. Interfaces 232 may include a port interface card having one or more network ports. NIC 230 also include an on-card memory 227 to, e.g., store packet data. Direct memory access transfers between NIC 230 and other devices coupled to bus 242 may read/write from/to the memory 227.

Memory device 244, NIC 230, disk 246, and microprocessor 210 provide an operating environment for a software stack that executes a hypervisor 214 and virtual machine 228 managed by hypervisor 214. In general, a virtual machine provides a virtualized/guest operating system for executing applications in an isolated virtual environment. Because a virtual machine is virtualized from physical hardware of the host server, executing applications are isolated from both the hardware of the host and other virtual machines. Computing device 200 executes hypervisor 214 to manage virtual machine 228. Example hypervisors include Kernel-based Virtual Machine (KVM) for the Linux kernel, Xen, ESXi available from VMWARE, Windows Hyper-V available from MICROSOFT, and other open-source and proprietary hypervisors. Hypervisor 214 may represent a virtual machine manager (VMM). Virtual machines 228 may host one or more applications, such as virtual network function (VNF) instances. In some examples, virtual machine 228 may host one or more VNF instances, where each of the VNF instances is configured to apply a network function to packets. A VNF may be an example of service 223.

An operating system kernel (not shown in FIG. 2) may execute in kernel space and may include, for example, a Linux, Berkeley Software Distribution (BSD), another Unix-variant kernel, or a Windows server operating system kernel, available from MICROSOFT.

Hypervisor 214 includes a physical driver 225 to use a physical function provided by NIC 230. In some cases, NIC 230 may also implement SR-IOV to enable sharing the physical network function (I/O) among virtual machines 224. Each port of NIC 230 may be associated with a different physical function. The shared virtual devices, also known as virtual functions, provide dedicated resources such that each of virtual machines 228 (and corresponding guest operating systems) may access dedicated resources of NIC 230, which therefore appears to virtual machine 228 as a dedicated NIC. Virtual function may be lightweight PCIe functions that share physical resources with the physical function and with other virtual functions. NIC 230 may have thousands of available virtual functions according to the SR-IOV standard, but for I/O-intensive applications the number of configured virtual functions is typically much smaller.

Virtual machine 228 includes virtual NIC 229 presented directly into the virtual machine 228 guest operating system, thereby offering direct communication between NIC 230 and virtual machine 228 via bus 242, using the virtual function assigned for the virtual machine. This may reduce hypervisor 214 overhead involved with software based, VIRTIO and/or vSwitch implementations in which a memory address space of hypervisor 214 within memory device 244 stores packet data and because copying packet data from NIC 230 to the memory address space of hypervisor 214 and from the memory address space of hypervisor 214 to memory address space of virtual machine 228 consumes cycles of microprocessor 210.

NIC 230 may further include a hardware-based Ethernet bridge 234. Ethernet bridge 234 may be an example of an embedded switch 234. Ethernet bridge 234 may perform layer 2 forwarding between virtual functions and physical functions of NIC 230. Thus, in some cases, Ethernet bridge 234 provides hardware acceleration, via bus 242, of inter-virtual machine 224 packet forwarding and hardware acceleration of packet forwarding between hypervisor 214 and any of virtual machines 224. Hypervisor 214 may access the physical function via physical driver 225. Ethernet bridge 234 may be physically separate from processing unit 25.

Computing device 200 may be coupled to a physical network switch fabric that includes an overlay network that extends a switch fabric from physical switches to software or "virtual" routers of physical servers coupled to the switch fabric, including virtual router 220. Virtual routers may be processes or threads, or a component thereof, executed by the physical servers, e.g., servers 12 and server 30 of FIG. 1, that dynamically create and manage one or more virtual networks usable for communication between virtual network endpoints. In one example, virtual routers implement each virtual network using an overlay network, which provides the capability to decouple an endpoint's virtual address from a physical address (e.g., IP address) of the server on which the endpoint is executing. Each virtual network may use its own addressing and security scheme and may be viewed as orthogonal from the physical network and its addressing scheme. Various techniques may be used to transport packets within and across virtual networks over the physical network. At least some functions of the virtual router may be performed as one of services 233. In the example of FIG. 2, virtual router 220 executes within hypervisor 214 that uses physical function 221 for I/O, but virtual router 220 may execute within a hypervisor, a host operating system, a host application, one of virtual machines 228, and/or processing unit 25 of NIC 230.

In general, each virtual machine 228 may be assigned a virtual address for use within a corresponding virtual network, where each of the virtual networks may be associated with a different virtual subnet provided by virtual router 220. Virtual machine 228 may be assigned its own virtual layer three (L3) IP address, for example, for sending and receiving communications but may be unaware of an IP address of the computing device 200 on which the virtual machine is executing. In this way, a "virtual address" is an address for an application that differs from the logical address for the underlying, physical computer system, e.g., computing device 200.

In one implementation, computing device 200 includes a virtual network (VN) agent (not shown) that controls the overlay of virtual networks for computing device 200 and that coordinates the routing of data packets within computing device 200. In general, a VN agent communicates with a virtual network controller for the multiple virtual networks, which generates commands to control routing of packets. A VN agent may operate as a proxy for control plane messages between virtual machine 228 and a virtual network controller, such as controller 24 (FIG. 1). For example, a virtual machine may request to send a message using its virtual address via the VN agent, and VN agent may in turn send the message and request that a response to the message be received for the virtual address of the virtual machine that originated the first message. In some cases, virtual machine 228 may invoke a procedure or function call presented by an application programming interface of VN agent, and the VN agent may handle encapsulation of the message as well, including addressing.

In one example, network packets, e.g., layer three (L3) IP packets or layer two (L2) Ethernet packets generated or consumed by the instances of applications executed by virtual machine 228 within the virtual network domain may be encapsulated in another packet (e.g., another IP or Ethernet packet) that is transported by the physical network. The packet transported in a virtual network may be referred to herein as an "inner packet" while the physical network packet may be referred to herein as an "outer packet" or a "tunnel packet." Encapsulation and/or de-capsulation of virtual network packets within physical network packets may be performed by virtual router 220. This functionality is referred to herein as tunneling and may be used to create one or more overlay networks. Besides IPinIP, other example tunneling protocols that may be used include IP over Generic Route Encapsulation (GRE), Virtual Extensible Local Area Network (VXLAN), Multiprotocol Label Switching (MPLS) over GRE (MPLSoGRE), MPLS over User Datagram Protocol (UDP) (MPLSoUDP), etc.

As noted above, a virtual network controller may provide a logically centralized controller for facilitating operation of one or more virtual networks. The virtual network controller may, for example, maintain a routing information base, e.g., one or more routing tables that store routing information for the physical network as well as one or more overlay networks. Virtual router 220 of hypervisor 214 implements a network forwarding table (NFT) 222A-222N for N virtual networks for which virtual router 220 operates as a tunnel endpoint. In general, each NFT 222 stores forwarding information for the corresponding virtual network and identifies where data packets are to be forwarded and whether the packets are to be encapsulated in a tunneling protocol, such as with a tunnel header that may include one or more headers for different layers of the virtual network protocol stack. Each of NFTs 222 may be an NFT for a different routing instance (not shown) implemented by virtual router 220.

Edge services controller 28 (FIG. 1) may use processing unit 25 of NIC 230 to augment the processing and networking functionality of computing device 200. Processing unit 25 includes processing circuitry 231 to execute services orchestrated by edge services controller 28. Processing circuitry 231 may represent any combination of processing cores, ASICs, FPGAs, or other integrated circuits and programmable hardware. In an example, processing circuity may include a System-on-Chip (SoC) having, e.g., one or more cores, a network interface for high-speed packet processing, one or more acceleration engines for specialized functions (e.g., security/cryptography, machine learning, storage), programmable logic, integrated circuits, and so forth. Such SoCs may be referred to as data processing units (DPUs). DPUs may be examples of processing unit 25.

In the example NIC 230, processing unit 25 executes an operating system kernel 237 and a user space 241 for services. Kernel 237 may be a Linux kernel, a Unix or BSD kernel, a real-time OS kernel, or other kernel for managing hardware resources of processing unit 25 and managing user space 241.

Services 233 may include network, security, storage, data processing, co-processing, machine learning or other services. Services 233, edge services platform (ESP) agent 236, mesh agent 243 and service proxy 235 include executable instructions. Processing unit 25 may execute instructions of services 233, ESP agent 236, service proxy 235 and mesh agent 243 as processes and/or within virtual execution elements such as containers or virtual machines. As described elsewhere in this disclosure, services 233 may augment the processing power of the host processors (e.g., microprocessor 210), e.g., by enabling computing device 200 to offload packet processing, security, or other operations that would otherwise be executed by the host processors. Network services of services 233 may include security services (e.g., firewall), policy enforcement, proxy, load balancing, or other L4-L7 services.

Processing unit 25 executes ESP agent 236 to exchange data with edge services controller 28 (FIG. 1) for the edge services platform. While shown in the example of FIG. 2 as being in user space 241, in other examples, ESP agent 236 is a kernel module of kernel 237. As an example, ESP agent 236 may collect and send telemetry data to the ESP controller. The telemetry data may be generated by services 233 and may describe traffic in the network, availability of computing device 200 or network resources, resource availability of resources of processing unit 25 (such as memory or core utilization), or other information. As another example, ESP agent 236 may receive, from the ESP controller, service code to execute any of services 233, service configuration to configure any of services 233, packets or other data for injection into the network.

Edge services controller 28 manages the operations of processing unit 25 by, e.g., orchestrating and configuring services 233 that are executed by processing unit 25, deploying services 233; adding, deleting, and replacing NICs within the edge services platform, monitoring of services 233 and other resources on NIC 230, and managing connectivity between various services 233 running on NIC 230. Example resources on NIC 230 include memory 227 and processing circuitry 231.

In accordance with various aspects of the techniques of this disclosure, processing unit 25 executes service proxy 235 to act as a proxy for a service 223 in virtual machine 228. Service proxy 235 may then communicate with other service proxies for services in a service mesh. Processing unit 25 includes processing circuitry 231 that executes service proxy 235 and mesh agent 243. Virtual machine 228 running on hypervisor 214 may host service 223 which is supported by service proxy 235 in NIC 230 to be part of the service mesh. Memory device 244, NIC 230, disk 246, and microprocessor 210 provide an operating environment for a software stack that executes hypervisor 214, virtual machine 228 and service 223 which is part of the service mesh. Service 223, service proxy 235, and mesh agent 243 may represent examples of service 47, service proxy 40, and mesh agent 39, respectively.

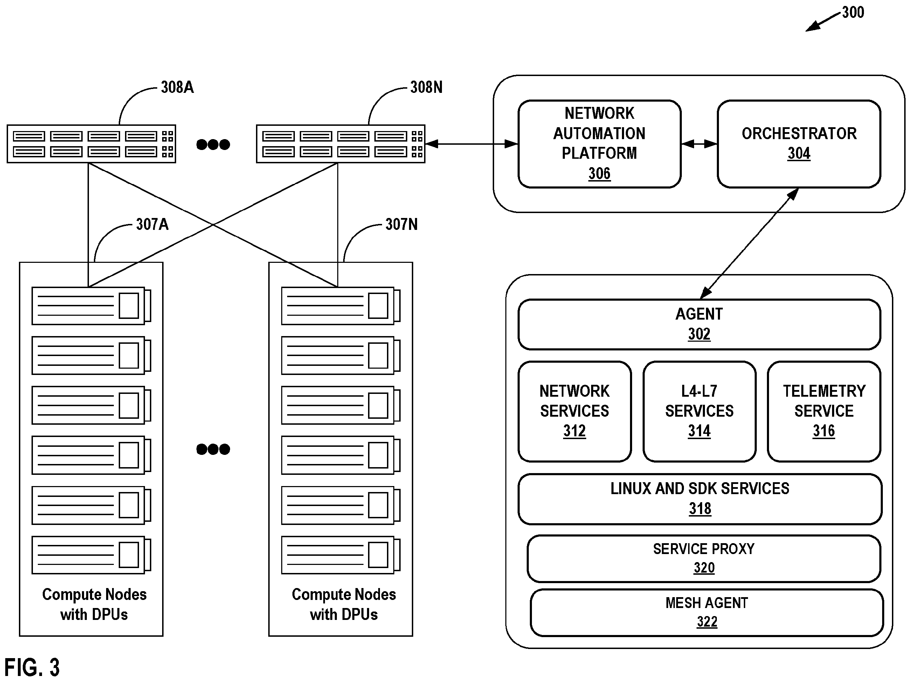

FIG. 3 is a conceptual diagram illustrating a data center 300 with servers that each include a network interface card having a separate processing unit, controlled by an edge services platform, according to techniques of this disclosure. Racks of compute nodes 307A-307N (collectively, "racks of compute nodes 307") may correspond to servers 12 and server 30 of FIG. 1, and switches 308A-308N (collectively, "switches 308") may correspond to the switches of switch fabric 14 of FIG. 1. Agent 302 or orchestrator 304 represents software executed by the processing unit (illustrated in FIG. 3 as a data processing unit or DPU) and receives configuration information for the processing unit and sends telemetry and other information for the NIC that includes the processing unit to orchestrator 304. Network services 312, L4-L7 services 314, telemetry service 316, and Linux and software development kit (SDK) services 318 may represent examples of services 233. Orchestrator 304 may represent an example of edge services controller 28 of FIG. 1.

Network automation platform 306 connects to and manages network devices and orchestrator 304, by which network automation platform 306 can utilize the edge services platform. Network automation platform 306 may, for example, deploy network device configurations, manage the network, extract telemetry, and analyze and provide indications of the network status.

In accordance with various aspects of the techniques of this disclosure, service proxy 320 may act as a proxy for services provided by virtual machines of compute nodes in racks 307. Service proxy 320 may communicate with other service proxies for services in the service mesh. Mesh agent 322 may be used to set up the service proxy 320. Service proxy 320 and mesh agent 322 may be software executed by the processing unit (illustrated in FIG. 3 as a data processing unit or DPU).

FIG. 4 is a conceptual diagram illustrating a service mesh extended to service 412, provided by Virtual Machine 410, using NIC 402, according to techniques of this disclosure. NIC 402 includes service proxy 404, packet sniffer 406, and mesh agent 408. The edge services controller 430 may include mesh provisioner 432 in communication with the mesh agent 408 in the provisioned NIC 402.

NIC 402 (more specifically, the processing unit - not shown in FIG. 4) may detect a service 412 provided by virtual machine 410. NIC 402 may detect the service 412 by snooping a message from the service 412 to service registry 434 using packet sniffer 406. For example, the headers of the messages passing through NIC 402 may be analyzed to identify service discovery requests and to identify the particular service 412 at the NIC 402. NIC 402 may apply deep packet inspection (DPI) and/or be configured with header templates, rules, patterns, or other data for identifying service 412, for example.

The service 412 may be compared to list of container-registered services. If a match is not found this may indicate that service 412 is a virtual machine service. The service proxy may be configured in response to not finding such a match.

NIC 402 may configure, in response to detecting the service 412, the service proxy 404 for execution by the NIC 402 to proxy the service 412 in a service mesh. The mesh agent 408 at the NIC 402 may be used to configure the service proxy 404.

Mesh provisioner 432 at edge services controller 430 may provision mesh agent 408 at NIC 402. Service proxy 404 may be associated with multiple services 412 and 413 at virtual machine 410 rather than requiring a separate service proxy for each of services 412 -413.

Service proxy 404 may connect to a mesh control plane controller 436 that authenticates service proxy 404 using configuration from the mesh agent 408. Service proxy 404 may then connect another service proxy, such as service proxy 418A, in the service mesh.

A service mesh may provide an infrastructure layer for modern distributed applications to exchange information between various micro services in a secure and observable way. For example, a simple e-commerce application can be divided into micro services like product-view service to show product information, a database service to maintain inventory of products, and a cart service to track products selected by a user.

A service mesh layer may control and manage inter-service communication using Layer-7 proxies like, Envoy, Nginx, etc. Services of the service mesh may interact with other services only through a service proxy, such as a Layer-7 service proxy. These service proxies may be configured and managed by service mesh controllers such as, Istio, Kong, Linkerd, etc. The service mesh has two primary components: the data plane and the control plane.

Service mesh may implement a data plane including services (such as services 412 and 413 of the virtual machine 410, and services 420A-420X of container pods 417A-417X) and service proxies (such as service proxy 404 of NIC 402 and service proxies 418A-418X of container pods 417A-417X). The data plane provides communication between services through service proxies. Service proxies may intercept the network traffic for that service and help in routing the traffic, triggering circuit breakers, requesting timeouts, and retries.

The control plane of the service mesh may include mesh control plane controller 430 and mesh service registry 431. The control plane may dynamically program the service proxies as per user configuration.

Many modern applications run in a containerized environment like Kubernetes. When the service mesh is deployed in a Kubernetes cluster or a microservice-based deployment platform, it runs service proxies 418A-418A as sidecars alongside corresponding services 420A-420X.

When the service mesh is completely within a containerized environment, an administrator can use various commercial/free software tools to manage the service mesh. To support legacy applications, the service mesh may be extended to include software modules running in virtual machines. However, there is limited support in the open-source community to deploy and manage these kinds of hybrid applications. In addition, it is a tedious, error-prone, and multi-step manual process.

Such manual steps may include:
1) Exposing the service mesh control plane or service mesh control plane controller 436 running in a Kubernetes cluster (e.g., container cluster 411) and make it reachable from Virtual Machines, such as virtual machine 410.
2a) Generating namespaces for VM-based workloads, service accounts, authentication tokens, certificates, mesh configurations involving service discovery address, health check probe endpoints, and authentication options.
2b) Securing transfer of generated configuration and authentication data to a target virtual machine, such as virtual machine 410.
3a) Generating VM Identity using a root certificate of the service mesh.
3b) Downloading and Installing a service proxy (e.g., envoy) or any packet router kernel modules (e.g., Extended Berkeley Packet Filter (eBPF)) in the Virtual machine.
4) Configuring the service proxy to perform service discovery and authentication probes
5) Configuring virtual machine domain name system (DNS) entries to reach the mesh control plane for service discovery
6) Detecting the type of services running in the VM and configure routing rules of service proxy as a reverse proxy or front proxy.
7a) Creating workload entry and service entry for the virtual machine service proxy in the service registry.
7b) Deleting workload entry and service entry when a virtual machine is not available or not running services.

An administrator must perform all the manual steps for each virtual machine. In addition, validating every new piece of software deployed during these steps is time-consuming.

In accordance with various aspects of the techniques of this disclosure, NIC 402 may create and run service proxy 404 that, at least in some cases, provides an automated and transparent method for service mesh expansion. Service proxy 404 in NIC 402 eliminates the need to modify virtual machine 410. This process also removes the need to validate additional software installed in VM 410 since VM 410 is unmodified and remains intact.

The mesh agent 408 may:
1. Auto-detect virtual machines 410 participating of service mesh.
2. Deploy and configure NIC-based edge proxy or egress proxy, such as service proxy 404, for services 412 and 413 running in virtual machine 410.

The mesh provisioner 432 may:
1. Drive mesh expansion into virtual machines 410 by provisioning mesh agent 408 and service proxy 404.
2. Be responsible for interacting with the service mesh control plane controller 436 to create a service entry in mesh service registry 431.
3. Provide proxy config, certificates and authentication tokens for service proxy 404 running on NIC 402.

When virtual machine 410 boots up, it may register itself with service registry 434 (such as service registry software, Zookeeper, Consul, etc.) to advertise services provided by virtual machine 410. This registration request includes metadata like, service names, port and protocol information about services virtual machine 410 is going to run. In some cases, when an administrator installs some services on the host, the installed services may register themselves with service registry 434. The installed services can be native applications or containerized services running as a single container or as a swarm of container services.

When NIC 402 boots up, mesh agent 408 in NIC 402 may use probes and snooping to detect if any of services 412 or 413 running in VM 410 are trying to join a service mesh by snooping for requests to service registry 434. Mesh agent 408 may detect two different types of services: dependent services and independent services.

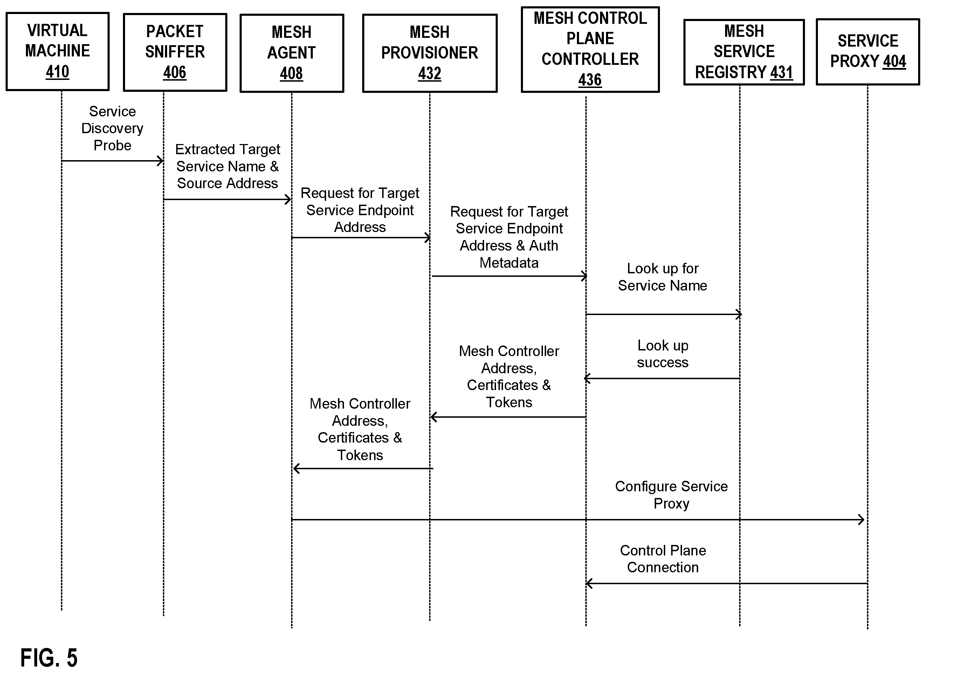

FIG. 5 is a conceptual diagram illustrating an auto-join of VM-based dependent services to a service mesh, according to techniques of this disclosure. Dependent services may invoke other services 420A-420X in the mesh and perform service discovery to collect target endpoints 437. Mesh agent 408 may detect these kinds of services by packet sniffing service discovery requests. Mesh agent 408 may positively identify if a service belongs to a VM (such as VM 410) or container pods 417A-417X by comparing the network address to known container network addresses. If the discovery does not originate in the container network of containers 417A-417X, then it may be safely assumed that it is coming from a VM.

When mesh agent 408 detects service discovery requests, mesh agent 408 may request mesh provisioner 432 to provide service end point metadata for the service name. Mesh provisioner 432 may in-turn request service mesh control plane controller 436 for service end point metadata by passing service name. Mesh control plane controller 436 may look up mesh service registry 431 and respond back to mesh provisioner 432 with service endpoint details when service look up is successful. On response from mesh control plane controller 436, mesh provisioner 432 may instruct mesh agent 408 to configure service proxy 404 with service endpoint address or control plane address, tokens, and certificates.

Service proxy 404 may make control plane connections to mesh control plane controller 436 and authenticate itself with mesh control plane controller 436 using certificates and tokens.

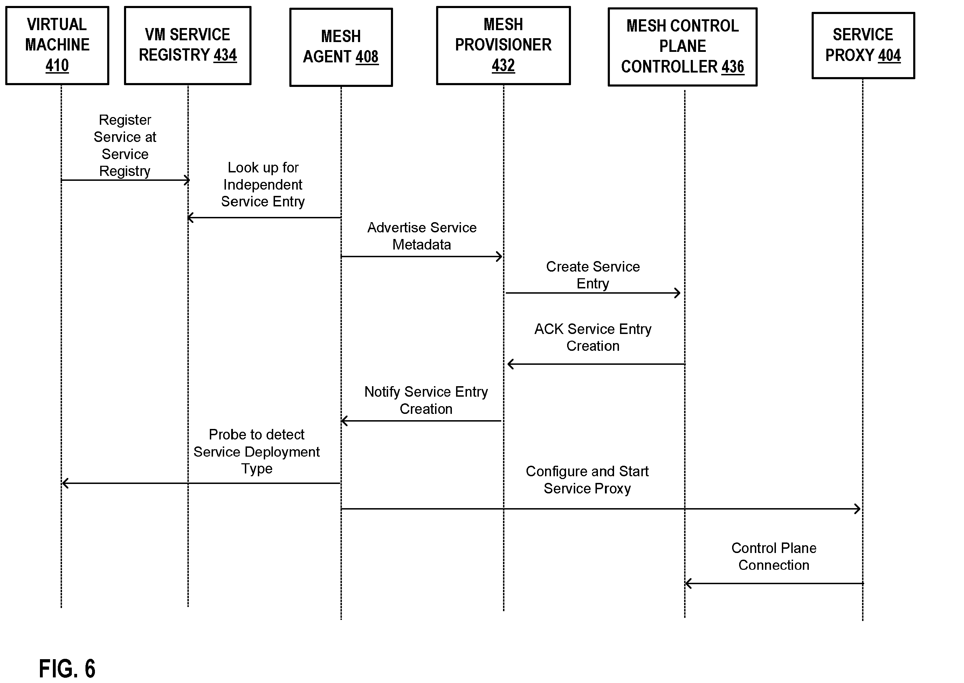

FIG. 6 is a conceptual diagram illustrating an auto-join of VM-based independent services to a service mesh, according to techniques of this disclosure. Independent services may provide services to other members of the mesh and publish or advertise their endpoints to service registry 434. Mesh agent 408 may detect these kinds of services by sniffing service registry advertisements. After that, mesh agent 408 may send probes to the target service and validate if the service belongs to VM 410 by comparing the destination address to known container networks. If the response to the probe does not come from the container network, then it is assumed that it is coming from a virtual machine, such as VM 410.

After detecting the VM-based services, mesh agent 408 may request the mesh provisioner to create service entry and provide proxy route configurations, certificates for TLS termination and authentication tokens for proxy authentication with mesh control plane controller 436. When mesh provisioner 432 requests mesh control plane controller 436 to create a service entry for an independent service, mesh control plane controller 436 may create a workload entry inside the service mesh. After creating the workload entry, it may create target service endpoint 437 inside the service mesh and adds service entry into its internal mesh service registry 431. Services 420A-420X running in the mesh may use these service entries to discover VM-based workloads before sending data. In addition, mesh control plane controller 436 may provide certificates and authentication tokens to the mesh provisioner 432. Mesh provisioner 432 may pass these to mesh agent 408 and request mesh agent 408 start service proxy 404 and authenticate with the mesh control plane controller 436.

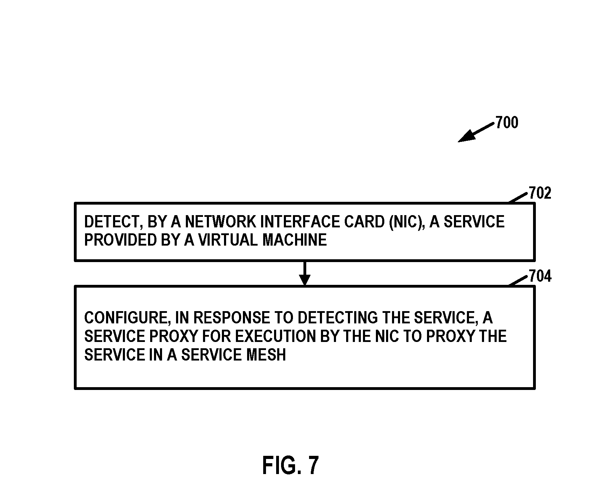

FIG. 7 is a flowchart illustrating an example method 700 according to techniques of this disclosure. In the example of FIG. 7, a NIC (e.g., one of NICs 32 of FIG 1, NIC 230 of FIG 2, NIC 402 of FIG 4) detects a service (e.g., one of service 46 of FIG 1, service 223 of FIG. 2, service 412-413 of Figure 4) provided by a virtual machine (e.g., one of VM 48 of FIG 1, VM 228 of FIG. 2, VM 410 of Figure 4) (702). The virtual machine may be a virtual machine executing on the compute node / server that includes the NIC. In response to detecting the service, the NIC may configure a service proxy (e.g., one of service proxy 40 of FIG 1, service proxy 235 of FIG. 2, service proxy 404 of Figure 4) for execution by the NIC to proxy the service in a service mesh (704).

Therefore, from one perspective, there have been described techniques for automatically and transparently providing service proxying to virtual machines using Network Interface Cards (NICs). In some examples, a service proxy implemented by a NIC of a computing device that hosts a virtual machine may mimic sidecar service proxy behavior. A NIC-based mesh agent may automatically detect the service offered by the virtual machine and interact with control plane components to dynamically incorporate the service into a service mesh.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium and/or a computer data transmission medium. A computer data storage medium may include random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. A computer data transmission medium may include transmission signals, carrier waves or the like. A computer data transmission medium may occur between components of a single computer system and/or between plural separate computer system.

In some examples, a computer-readable storage medium may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

## Claims

1. A method comprising:
detecting (702), by a network interface card, NIC, a service provided by a virtual machine; and
configuring (704), in response to detecting the service, a service proxy for execution by the NIC to proxy the service in a service mesh.

2. The method of claim 1, wherein detecting the service includes snooping a message to or from the service at the NIC.

3. The method of any of claims 1-2, wherein detecting the service includes looking up a service entry in a registry by a mesh agent at the NIC.

4. The method of any of claims claim 1-3, further comprising comparing the service to container-registered services and not finding a match to determine that the service is a virtual machine service.

5. The method of any of claims 1-4, wherein configuring the service proxy comprises configuring, in response to comparing the service to container-registered services and not finding a match, the service proxy.

6. The method of any of claims 1-5, wherein configuring the service proxy comprises configuring, by a mesh agent executed by the NIC, the service proxy.

7. The method of claim 6, further comprising provisioning, by a mesh provisioner at an edge services controller, the mesh agent executed by the NIC with a mesh controller address, certificates and tokens.

8. The method of any of claims 1-7, wherein the service proxy is associated with multiple services provided by the virtual machine.

9. The method of any of claims 1-8, further comprising connecting, by the service proxy, to a mesh control plane controller that authenticates the service proxy using configuration data received by the service proxy from a mesh agent of a mesh provisioner.

10. The method of any of claims 1-9, further comprising connecting the service proxy executed at the NIC for the service provided by the virtual machine to another service proxy in the service mesh.

11. A Network Interface Card comprising means for performing the method recited by any of claims 1-10.

12. A computer-readable medium comprising instructions for causing one or more programmable processors of a Network Interface Card to perform the method recited by any of claims 1-10.

## Patentansprüche

1. Verfahren, das Folgendes umfasst:
Detektieren (702), durch eine Netzwerkschnittstellenkarte, NIC, eines Dienstes, der durch eine virtuelle Maschine bereitgestellt wird; und
Konfigurieren (704), als Reaktion auf das Detektieren des Dienstes, eines Dienstproxys zur Ausführung durch die NIC, um den Dienst in einem Dienst-Mesh als Proxy zu übernehmen.

2. Verfahren nach Anspruch 1, wobei das Detektieren des Dienstes das Snooping einer Nachricht zu oder von dem Dienst an der NIC beinhaltet.

3. Verfahren nach einem der Ansprüche 1-2, wobei das Detektieren des Dienstes das Nachschlagen eines Diensteintrags in einer Registrierung durch einen Mesh-Agenten an der NIC beinhaltet.

4. Verfahren nach einem der Ansprüche 1-3, das ferner das Vergleichen des Dienstes mit Container-registrierten Diensten und Nichtfinden einer Übereinstimmung umfasst, um zu bestimmen, dass der Dienst ein Dienst für eine virtuelle Maschine ist.

5. Verfahren nach einem der Ansprüche 1-4, wobei das Konfigurieren des Dienstproxys das Konfigurieren des Dienstproxys als Reaktion auf das Vergleichen des Dienstes mit Container-registrierten Diensten und das Nichtfinden einer Übereinstimmung umfasst.

6. Verfahren nach einem der Ansprüche 1-5, wobei das Konfigurieren des Dienstproxys das Konfigurieren des Dienstproxys durch einen Mesh-Agenten, der durch die NIC ausgeführt wird, umfasst.

7. Verfahren nach Anspruch 6, das ferner das Bereitstellen, durch einen Mesh-Provisioner an einer Edge-Dienststeuerung, des Mesh-Agenten, der durch die NIC ausgeführt wird, mit einer Mesh-Steuerungsadresse, Zertifikaten und Token umfasst.

8. Verfahren nach einem der Ansprüche 1-7, wobei der Dienstproxy mit mehreren Diensten assoziiert ist, die durch die virtuelle Maschine bereitgestellt werden.

9. Verfahren nach einem der Ansprüche 1-8, das ferner das Verbinden, durch den Dienstproxy, mit einer Mesh-Steuerebenensteuerung umfasst, die den Dienstproxy unter Verwendung von Konfigurationsdaten authentifiziert, die durch den Dienstproxy von einem Mesh-Agenten eines Mesh-Provisioners empfangen werden.

10. Verfahren nach einem der Ansprüche 1-9, das ferner das Verbinden des Dienstproxys umfasst, der an der NIC für den Dienst ausgeführt wird, der durch die virtuelle Maschine bereitgestellt wird, mit einem anderen Dienstproxy in dem Dienst-Mesh.

11. Netzwerkschnittstellenkarte, die Mittel zum Durchführen des Verfahrens nach einem der Ansprüche 1-10 umfasst.

12. Computerlesbares Medium, das Anweisungen zum Veranlassen eines oder mehrerer programmierbarer Prozessoren einer Netzwerkschnittstellenkarte umfasst, um das Verfahren nach einem der Ansprüche 1-10 durchzuführen.

## Revendications

1. Procédé, comprenant les faits :
de détecter (702), par une carte d'interface de réseau, « Network Interface Card » NIC, un service fourni par une machine virtuelle ; et
de configurer (704), en réponse au fait de détecter le service, un mandataire de service pour exécution par la NIC pour mandater le service dans un maillage de service.

2. Procédé de la revendication 1, dans lequel le fait de détecter le service inclut le fait de fouiner un message au service, ou en provenance de celui-ci, à la NIC.

3. Procédé de quelconques des revendications 1 et 2, dans lequel le fait de détecter le service inclut le fait de consulter une entrée de service dans un registre, par un agent de maillage, à la NIC.

4. Procédé de quelconques des revendications la revendication 1 à 3, comprenant en outre les faits de comparer le service à des services enregistrés par conteneur et de ne pas trouver de correspondance pour déterminer que le service est un service de machine virtuelle.

5. Procédé de quelconques des revendications 1 à 4, dans lequel le fait de configurer le mandataire de service comprend le fait de configurer, en réponse aux faits de comparer le service à des services enregistrés par conteneur et de ne pas trouver de correspondance, le mandataire de service.

6. Procédé de quelconques des revendications 1 à 5, dans lequel le fait de configurer le mandataire de service comprend le fait de configurer, par un agent de maillage exécuté par la NIC, le mandataire de service.

7. Procédé de la revendication 6, comprenant en outre le fait de fournir, par un fournisseur de maillage à un contrôleur de services en périphérie, à l'agent de maillage exécuté par la NIC, une adresse de contrôleur de maillage, des certificats, et des jetons.

8. Procédé de quelconques des revendications 1 à 7, dans lequel le mandataire de service est associé à de multiples services fournis par la machine virtuelle.

9. Procédé de quelconques des revendications 1 à 8, comprenant en outre le fait de se connecter, par le mandataire de service, à un contrôleur de plan de contrôle de maillage qui authentifie le mandataire de service en utilisant des données de configuration reçues par le mandataire de service en provenance d'un agent de maillage d'un fournisseur de maillage.

10. Procédé de quelconques des revendications 1 à 9, comprenant en outre le fait de connecter le mandataire de service exécuté à la NIC pour le service fourni par la machine virtuelle à un autre mandataire de service dans le maillage de service.

11. Carte d'interface de réseau, comprenant des moyens pour réaliser le procédé décrit par de quelconques des revendications 1 à 10.

12. Support lisible par ordinateur, comprenant des instructions pour amener un ou plusieurs processeurs programmables d'une carte d'interface de réseau à réaliser le procédé décrit par de quelconques des revendications 1 à 10.
